# EUROPEAN PATENT APPLICATION

(11) **EP 4 557 450 A1**
(43) Date of publication of application: **21.05.2025**
(21) Application number: 23210137.8
(22) Date of filing: 15.11.2023
(51) Int. Cl.: H01M 10/48, H01M 50/503, H01M 50/519, H01M 50/569

(54) **BATTERY MODULE**

(71) Applicant: Samsung SDI Co., Ltd., Yongin-si, Gyeonggi-do 17084 (KR)
(72) Inventor: Gombats, Ilya, 8052 Graz (AT); Walter, Lukas, 8010 Graz (AT)
(74) Representative: Gulde & Partner

(57) **Abstract**

The present disclosure refers to a battery module and an interconnecting structure, wherein a conductive pad (20) is provided between a flexible interconnect (10) and a busbar (30), and wherein the conductive pad (20) includes a first part (21) extending in a first plane, at least one second part (22) extending in a second plane parallel to the first plane and spaced apart from the first part (21) in a direction perpendicular to the first and second planes, at least one third part (23) connecting the first part (21) with each of the at least one second part (22), the busbar (30) is attached to the first part (21) of the conductive pad (20), and the flexible interconnect (10) is attached to the at least one second part (22) of the conductive pad (20).

## Description

### Field of the Disclosure

The present disclosure relates to battery packs and/or modules, whereby multiple battery cells are interconnected and it is desirable to collect electrical information of each battery cell for monitoring purposes. Therefore, the terminals of the cells are connected to interconnects which provide said electrical information to a battery management unit or system (BMU/BMS).

### Technological Background

Recently, vehicles for transportation of goods and people have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by, for example, a gasoline generator or a hydrogen fuel power cell. A hybrid vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable or secondary battery differs from a primary battery in that it is designed to be repeatedly charged and discharged, while the latter is designed to provide only an irreversible conversion of chemical to electrical energy. Low-capacity rechargeable batteries are used as a power supplies for small electronic devices, such as cellular phones, notebook computers and camcorders, while high-capacity rechargeable batteries are used as a power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. That is, the battery module is formed by interconnecting the electrode terminals of the plurality of unit battery cells in an arrangement of configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage. The battery modules may include submodules with a plurality of stacked battery cells and each stack including cells connected in parallel that, in turn, are connected in series (*XpYs*) or cells connected in series that are, in turn, connected in parallel (*XsYp*).

A battery pack is a set of any number of (identical or different) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (e.g., total voltage of the battery pack or battery modules and/or, voltages of individual cells), temperature (e.g., an average temperature of the battery pack or battery modules, coolant intake temperature, coolant output temperature, and/or temperatures of individual cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be distributed, with a BMS board is installed at each cell, with just a single communication cable between the battery and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated in case of over-current, overvoltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

Static control of battery power output and charging may not be sufficient to meet the dynamic power demands of various electrical consumers connected to the battery system. Thus, steady exchange of information between the battery system and the controllers of the electrical consumers may be employed. This information may include the battery system's actual state of charge(SoC), potential electrical performance, charging ability and internal resistance as well as actual or predicted power demands or surpluses of the consumers. Therefore, battery systems may include a battery management system, BMS, for obtaining and processing such information on a system level and may also include a plurality of battery module managers (BMMs), which are part of the system's battery modules and obtain and process relevant information on a module level. The BMS measures the system voltage, the system current, the local temperature at different places inside the system housing, and the insulation resistance between live components and the system housing while the BMMs may measure the individual cell voltages and temperatures of the battery cells in a battery module.

The BMS/BMM or also called battery management unit (BMU) is provided to manage the battery pack, such as by protecting the battery from operating outside its safe operating area (or safe operating parameters), monitoring its state, calculating secondary data, reporting that data, controlling its environment, authenticating it and/or balancing it.

In order to manage or control the battery cells in the battery module or pack, several types of interconnects are necessary. A first type of interconnects is so called busbars which connect two or more terminals of battery cells in order to provide a parallel or serial configuration of the cells. Due to their nature of providing current from/to the cells, busbars are solid and suitable for conducting high currents. Busbars may have a stripe-like shape with a large surface area. The large surface area can carry substantial electric currents. In most applications, they are passive components which can be fitted in even very small and cramped installation spaces but optionally they may also be active components.

A second type of interconnects relates to signal lines or wires which are used to transfer electrical information of a cell or sub-module to the BMS/BMU. Due to their nature of carrying signals, those lines may be flexible, i.e. implemented as a flexible interconnect, e.g. a flexible printed circuit (FPC). Flexible interconnects are used inside the battery module to connect battery cell poles with the battery management unit. The flexible interconnect may extend over the bus bars and, in this case, requires very smooth edges and surface of the bus bars, which is difficult or impossible to realize and check. A flexible interconnect may be formed as a stack-up of an isolating base material, a copper layer, out of which multiple conducting traces or signal lines may be formed, and an isolating cover layer. While the material of the base and the cover layer have very good isolating properties, they don't need to be very thick to fulfill their purpose as isolation. Their thickness ranges in the tens of micrometers. This isolating cover layer may be a thin layer of an insulating material, e.g. polyimide (PI), which is mechanically durable. Even though the material is durable from a mechanical point of view, because of this small thickness it needs to be protected from hazards, e.g. sharp edges, rough surfaces, stress and so on. In other words, this durability is limited by the thickness of the layer, i.e. a very thin layer of only single digit micrometer thickness would be fragile. Due to the desire to monitor the cell terminals and the generally high number of cells, the flexible interconnect may have a quite high number of conducting traces, wherein each trace is connected to a cell terminal or a busbar. Or a cell terminal may be connected to a busbar, which then has the same potential for all connected cell terminals. In this sense, it might be sufficient to connect the flexible interconnect to busbars, in order to obtain the potential for the cell terminals. If all potentials of all cell terminals are known, the voltage of each cell is known too.

Going further into details, busbars may be welded to battery terminals. I.e., on a busbar may be a welding joint and there can be a burr from punching. In particular, welding may leave a welding spot which may be of considerable heights and/or which may have sharp gratings. Additionally, the busbar may itself have scratches or gratings or a bur from its preceding production process. In combination with movement from cell swelling and vibration of the vehicle, the isolation of the flexible interconnect can be damaged. Please note that all of the preceding matters will be referred to as defects hereinafter. Obviously, such defects can be removed but this would require additional effort and is thus costly. As mentioned above, the flexible interconnects are connected to the busbars.

In the prior art, the flexible interconnects have been connected to the busbars by so called pads or tabs, which are merely a flat piece of sheet metal, made of Ni, and which are welded to the busbar, which might be another source for welding defects. As the Ni-tabs are flat and directly soldered to the flexible interconnect, the flexible interconnect is lying directly on the bus bar, which creates a risk of shortcuts as the thickness of the flexible interconnect insulation may only be 50 µm of polyimide (PI). In other words, when a flexible interconnect lies flat on a busbar - with said flat pad in between - it is possible that the thin isolation layer of the flexible interconnect gets damaged by one of the above-mentioned defects. Should this be the case, as the busbar is undervoltage and the flexible interconnect is connected to other busbars, the risk of a short circuit between them exists. Since the flexible interconnect can be soldered to the pad with the face carrying the signal lines downwards, it is difficult to check for such short circuits. Additionally, said defects would be covered by the flexible interconnect so that it is difficult to visually inspect the connections for defects. This uncertainty adversely affects reliability of the whole battery module or pack. Furthermore, due to the above difficulties, automatic assembly has been avoided and often manual assembly was preferred.

In the related prior art, even though there have been disclosures of providing busbar-like structures with spacers to a flexible interconnect, like in US 2005110458 A1, the spacing provided by the spacer in vertical direction of the flexible PCB is not limited, i.e. an additional spacer or positioning means would be required for positioning the flexible PCB at a desired height. Further, a blade of the spacer goes through the flexible PCB which might not be desired due to complex positioning and the need for holes in the flexible PCB.

Further approaches to solve the problem of the present invention may be using plastic parts to space the flexible interconnect from the busbar. However, this approach requires additional parts which is costly due to the additional material and parts required, a rather difficult assembly, due to the increased number of parts to be assembled and therefore, increased costs.

### Summary of Invention

The object of the invention is to provide a more reliable battery cell contact structure. Further, automatic assembly shall be improved. These objects are solved by providing a distance between the busbar and the flexible interconnect, spacing apart the busbar from the flexible interconnect. Such a distance can be realized by using a non-flat pad, for instance made of a sheet metal, in particular but not limited to Ni-Tabs which can keep the flexible interconnect away from the busbar in order to increase the reliability of the interconnect. This is achieved by an improved isolation, which leads to a lower risk of short circuits and also an increased flexibility of the overall interconnect-structure. This flexibility of the interconnect-structure results in an improved long-term reliability due to improved stress absorption and release capabilities.

The invention is defined by the appended claims. The description that follows is subjected to this limitation. Any disclosure lying outside the scope of said claims is only intended for illustrative as well as comparative purposes.

The general inventive concept and preferred embodiments will be described in detail below, in the section "Detailed Description of the Invention" and "General Concept".

According to a first aspect of the disclosure, a battery module includes a plurality of battery cells, a busbar for electrically connecting the plurality of battery cells, a flexible interconnect for providing electrical information of the battery cells to a battery management system, a conductive pad provided between the flexible interconnect and the busbar. The pad includes: a first part extending in a first plane, at least one second part extending in a second plane parallel to the first plane and spaced apart from the first part in a direction perpendicular to the first and second planes, at least one third part connecting the first part with each of the at least one second part. The first part extends from the third part in a direction opposite the direction the at least one second part extends from the third part. The busbar is attached to the first part of the pad, and the flexible interconnect is attached to the at least one second part of the pad.

When the first part and the second part are spaced apart, vertically spaced apart, a space is created between the flexible interconnect and the busbar. This space increases the reliability by avoiding damages of the flexible interconnect due to sharp edges or rough surfaces or burrs from the busbar. In other words, the risk of a mechanical direct connection between a flexible interconnect, for instance in the form of an FPC, and a busbar resulting in possible cell shortcuts are minimized. Furthermore, the shape allows deformation if longitudinal stress is applied at the flexible interconnect and reduces the risk of damaging the flexible interconnect, i.e. it provides flexibility of the connection-structure itself which may absorb and/or relieve mechanical stress, in particular longitudinal mechanical stress. The ability to absorb or relieve mechanical stress may depend on the height and thickness of the pad. In particular, the flexibility is increased compared to a flat design, i.e. a flat connection between the flexible interconnect and the busbar.

According to one aspect of the present disclosure, a first gap may be formed between the flexible interconnect and the first part of the pad. The first gap is measured from the top surface of the first part of the pad facing the flexible interconnect and the lower surface of the flexible interconnect facing the first part of the pad. The height of the first gap is larger than the material thickness of the first part of the pad. Advantageously, this may strengthen the effects regarding flexibility of the pad and reliability as a whole, as mentioned above.

According to another aspect of the present disclosure, a second gap may be formed between the flexible interconnect and the busbar. The second gap is measured from the top surface of the busbar facing the flexible interconnect and the lower surface of the flexible interconnect facing the busbar. The height of the second gap may be larger than the sum of the material thicknesses of the first and second part of the pad. This may strengthen the effects regarding flexibility of the pad and reliability as a whole, as mentioned above.

In particular, the first gap and/or the second gap may be 0.5 to 3 mm, 0.8 to 2 mm, most 1.5 to 1.8 mm. In these ranges, a good compromise between a compact design and taking full advantage of the present application is achieved. With more than 0.8 mm, reliability can be improved considerably. 2 mm provides a very good flexibility already. Optionally, the gap may not be constant. Then, the values may refer to the maximum value of the gap and the minimum values may refer to the minimum values of the above ranges.

According to one embodiment, the busbar may be below the first part of the pad and on top of the battery cells and/or the flexible interconnect is on top of the second part of the pad.

Optionally, the first part is directly connected to the busbar. This enables a precise positioning of the pad and the flexible interconnect. Positioning accuracy is beneficial for automated, and therefore, convenient assembly. In summary, this embodiment is economical and functional.

In another embodiment, the first part may be welded to the busbar. Welding is quick and precise and suitable for the connection of a busbar with a conductive pad. The pad may be made of Ni, but is not limited thereto. The pad may have a material thickness of 0.2 to 1 mm, 0.3 to 0.8 mm, most 0.4 to 0.6 mm and/or a width of 0.5 to 3 mm, 0.6 to 2 mm, most 0.7 to 1.5 mm. A thickness of more than 0.2 mm has sufficient strength and very good flexibility. A thickness of 1 mm has a very good strength and sufficient flexibility. A larger width of the pad is preferable for easy assembly, with larger tolerances for welding.

Optionally, the second part is directly connected to the flexible interconnect. This enables a precise positioning of the pad and the flexible interconnect. Positioning accuracy is beneficial for automated and therefore, convenient assembly. In summary, this embodiment is economical and functional.

According to another embodiment, the second part may be soldered to the flexible interconnect. Soldering is suitable for thin conductor lines or signal lines for transporting electrical information of the flexible interconnect to a BMU.

Yet another aspect relates to the pad being non-planar. A non-planar pad provides a spacing which is larger than the thickness of the material alone. This saves material compared to a solid pad providing the same spacing. Additionally, flexibility is introduced.

According to one more aspect of the present disclosure, the first part and/or the second part may be planar. A planar surface of these parts increases the contact surface. It also lowers the contact resistance. Furthermore, a flat second part provides mechanical support for the flexible interconnect. A flat first part provides support for the pad together with the flexible interconnect.

Optionally, the flexible interconnect, the pad, and the busbar may be arranged in parallel to each other. This enables easy manufacturing. Additionally, automatic placement is possible. The flexible interconnect, the pad, and the busbar may also be horizontally stacked layered structures, optionally directly stacked on top of each other, respectively. This ensures a compact design with minimal space requirements

In one further embodiment, the third part is formed to extend in a plane perpendicular to the first plane and the second plane. This allows for large spacing by using minimal material. Further, a right angle is easy to form. Additionally, this shape enables maximum support in vertical direction, so that in some embodiments, it might be sufficient to have only one third part.

In one additional embodiment, the third part is formed to extend in a plane tilted with respect to a plane perpendicular to the first plane and second plane. The tilted arrangement allows for a spring-like behavior. This benefits stress-release and stress-absorption capabilities in horizontal and vertical direction.

Optionally, the pad has a z-shape, or a u-shape, or an Ω-shape. For the z-shape, the lower straight leg corresponds to the first part, the upper straight portion parallel to the lower straight leg corresponds to the second part, and the oblique portion between the lower straight leg and the upper straight portion corresponds to the third part. The z-shape has a particular good elasticity in vertical direction. Optionally, the projection of the first part on the second part may overlap such, that their size and positioning are identical, with the only difference being that they are placed in parallel planes. This has a compact footprint and is suitable for compact embodiments. For the u-shape, the lower straight portion or bottom corresponds to the first part. The two straight upright portions on the sides correspond to two third parts and the second parts extend - parallel to the first part - from the upper ends of the two straight upright portions, away from the first part. The u-shape has a particular good flexibility in horizontal direction. For the Ω-shape, the two lower legs correspond to two second parts, the part of the middle portion of the Ω-shape which has a tangent which is parallel to the two lower legs forms the first part, which might be flat instead of round, and the two sections between the first part and the two second parts constitute the two third parts. The Ω-shape has a particular good elasticity in vertical and horizontal direction.

In one particular embodiment, the first part may be between the two second parts and the two third parts may be between the respective second part and the first part. The two second parts provide good support for the flexible interconnect and the two third parts provide good support in vertical direction. In particular, this structure is resilient to external stress, in particular longitudinal stress.

In one further embodiment, the at least one second part may be, in its plane and on its free end, recessed such that two fingers and a recess are formed. The recess is suitable for accommodating solder or excess solder. Thereby, the solder is held in place. Additionally, the dosage of solder becomes more tolerant and the placement of the flexible interconnect becomes more convenient. Furthermore, since the solder connection also becomes more consistent, the contact resistance is more consistent. Therefore, the electrical information is also more consistent and reliable.

In one optional embodiment, the flexible interconnect may be formed as a flexible printed circuit (FPC). A flexible interconnect is easy to design, manufacture, handle, and place, as it may include a plurality of electrical lines or signal lines isolated from each other.

In one further embodiment, the flexible interconnect may be electrically connected to multiple busbars, wherein the busbars remain electrically isolated from each other. This arrangement enables the use of only one flexible interconnect to access the electrical information of any arbitrary number of battery cells along the battery module by only a few, i.e. one or two flexible interconnects.

Further optionally, the flexible interconnect may have a cutout where a first plane of the flexible interconnect overlaps with a second plane, intersecting with the pad and parallel to the first plane, in vertical direction of said plane, except where the pad is connected to the flexible interconnect. Alternatively, the cutout is smaller, i.e. equivalent to the area in which the first part of the pad overlaps with the flexible interconnect. The first portion of the pad may be welded through this cutout to the busbar.

According to another aspect of the disclosure, the battery pack mentioned above may be used in electric vehicles.

One further aspect relates to that the pad may be produced by a punching process. Punching is a quick and easy manufacturing method with high throughput and consistency. In particular, the shape of the pad may be such that it can be formed or produced by a punching process. Thereby, it should fulfill all or most of the positive functions mentioned, like being weldable - in particular the first part - and solderable by accommodating the solder such that the solder joint stays the same - the second part - while providing not only flexibility, in particular into longitudinal direction, but also connecting the flexible interconnect with the busbar.

Further aspects of the present disclosure may be learned from the following description.

### Brief Description of the Drawings

Features will become apparent to those of ordinary skill in the art by describing in detail exemplary embodiments with reference to the attached drawings in which:
Fig. 1 illustrates a partial perspective view of a battery module according to an embodiment of the invention.
Fig. 2 illustrates a partial perspective view of a flexible interconnect according to prior art.
Fig. 3 illustrates a schematic cross section of an interconnect-structure according to prior art.
Fig. 4 illustrates a cross-sectional view of a pad according to an embodiment of the invention.
Fig. 5 illustrates a schematic cross section of a busbar to a flexible interconnect by a pad according to an embodiment of the invention.
Fig. 6 illustrates a schematic cross section of a busbar to a flexible interconnect by a pad according to some embodiment of the invention.
Fig. 7 illustrates a schematic cross section of a busbar to a flexible interconnect by a pad according to some embodiment of the invention.
Fig. 8 illustrates a top view of a pad according to an embodiment of the invention.

### Detailed Description of the invention

Reference will now be made in detail to embodiments and examples which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will also be understood that when a film, a region, or an element is referred to as being "above" or "on" another film, region, or element, it can be directly on the other film, region, or element, or intervening films, regions, or elements may also be present.

The electrical connections or interconnections described herein may be realized by conducting elements, e.g. on a PCB or another kind of circuit carrier. The conducting elements may comprise metallization, e.g. surface metallizations and/or pins, and/or may comprise conductive polymers or ceramics.

In the drawings, the sizes of elements may be exaggerated for clarity. For example, in the drawings, the size or thickness of each element may be arbitrarily shown for illustrative purposes, and thus the embodiments of the present invention should not be construed as being limited thereto.

### General Concept

According to one aspect of the present disclosure, a battery module includes a plurality of battery cells, a busbar for electrically connecting the plurality of battery cells, a flexible interconnect for providing electrical information of the battery cells to a battery management system and a conductive pad provided between the flexible interconnect and the busbar. Thereby, the pad includes a first part extending in a first plane, at least one second part extending in a second plane parallel to the first plane and spaced apart from the first part in a direction perpendicular to the first and second planes and at least one third part connecting the first part with each of the at least one second part. The parts are related such that the first part extends from the third part in a direction opposite the direction the at least one second part extends from the third part. Further, the busbar is attached to the first part of the pad, and the flexible interconnect is attached to the at least one second part of the pad.

In other words, the pad is used for spacing the busbar from the flexible interconnect by providing a certain defined shape of the pad. In particular, the pad has a non-flat or non-planar shape such that the distance between the busbar and the flexible interconnect will be greater than in the prior art, where flat pads have been used, and where the spacing has been limited by the material thickness of the pad. Due to the increased spacing of the present invention, reliability is increased because the risk of short-circuits is reduced. However, other positive effects may also be obtained. For instance, due to the larger distance of the flexible interconnect from the busbar, the requirements on the surface quality of the busbar could be lowered, so that time and power-consuming additional processing steps can be dispensed with. Another positive effect is the increased mechanical flexibility which is brought about by the spacing of the first part from the second part.

### Specific Embodiments

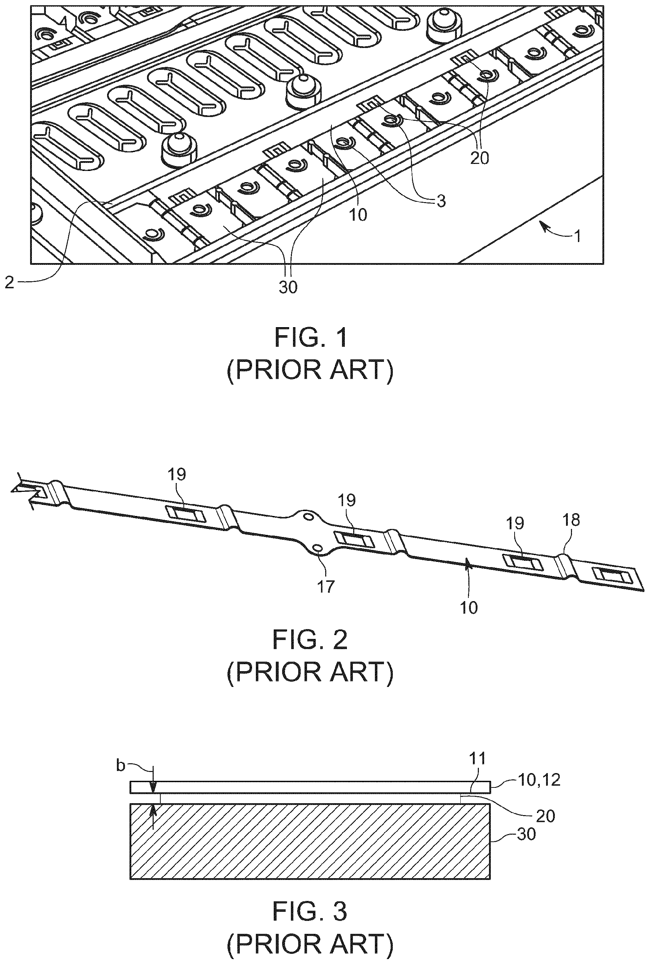

Fig. 1 illustrates a battery module 1 of the prior art. Fig. 1 is a partial perspective view of an upper surface of the battery module 1 in which a plurality of battery cells 2 are arranged in parallel along a longitudinal direction of the battery module 1. The plurality of battery cells 2 are connected to each other by a busbar 30. The busbar 30 connects terminals 3 of battery cells 2. Two neighboring battery cells 2 are connected by the busbar 30. The busbar 30 extends along the stacking direction of the battery cells 2, on top of and parallel to the stacking direction of the battery cells 2. In the battery module 1 of Fig. 1, the busbar 30 has a planar structure. On top of the busbar 30, a pad 20 is arranged, which is connected to a flexible interconnect 10. The flexible interconnect 10 extends along the battery module 1 in the longitudinal direction. Referring to Fig. 1, it can be seen that six busbars 30 each have one pad 20 which are all connected to the same flexible interconnect 10. This means in turn that the flexible interconnect 10 has at least six signal lines. In this embodiment, the number of signal lines formed on the flexible interconnect 10 is equal to the number of busbars 30 connected to the flexible interconnect 10.

Figs. 2 and 3 illustrate prior art battery cells contacting structure. Fig. 2 discloses one non-limiting example of a flexible interconnect 10, an FPC 12, according to a prior art design. Pad-portions 19 may be cut-out such that flat pads, to be connected to busbars 30, can be soldered to the bottom of the flexible interconnect 10 at the locations of the pad-portions 19. Further, the flexible interconnect 10 may include mounting holes 17 on its sides with a margin for adjustment when placing the flexible interconnect 10. The signal lines (not shown) for transferring the electrical information of the battery cells 2 to a battery management system (not shown) are located on the bottom of the flexible interconnect 10. The signal lines (not shown) may be coated with an isolation layer 11. However, the isolation layer 11 can be damaged when not handled accurately, e.g. during installation, in particular manually or automatically, by gratings or burrs or sharp edges or other damages on the surface of the busbar 30 facing the flexible interconnect 10. Additionally, this structure with flat pads has no sufficient flexibility in longitudinal direction and cannot absorb stress.

Fig. 3 is a cross-sectional view illustrating a connection of a flexible interconnect 10 to a busbar 30 by a pad 20 according to the state of the art. The busbar 30 is provided for electrically connecting a plurality of battery cells (not shown). In particular, the busbar 30 is, on its lower side, connected to one or more battery cell terminals (not shown) and, on its upper side, connected to the pad 20. The pad 20 is, on its upper side, connected to the flexible interconnect 10, which may be implemented as a flexible printed circuit (FPC) 12. The flexible interconnect 10 is configured to provide electrical information of the battery cells 2 to a battery management system. The pad 20 is conductive and may, throughout this disclosure, also be referred to as a conductive pad 20 and is provided between the flexible interconnect 10 and the busbar 30. In other words, the pad 20 is sandwiched between the busbar 30 and the flexible interconnect 10. It can be seen that the distance b between the busbar 30 and the flexible interconnect 10 is equivalent to the thickness of the material of the pad 20. In other words, the pad 20 has a flat shape. Referring to Fig. 1 to 3, the busbar 30, the pad 20 and the flexible interconnect 10 are stacked on top of each other parallel to the top surface of the battery cells 2. Each of the elements extends in a two-dimensional plane parallel to the top of the battery cells 2.

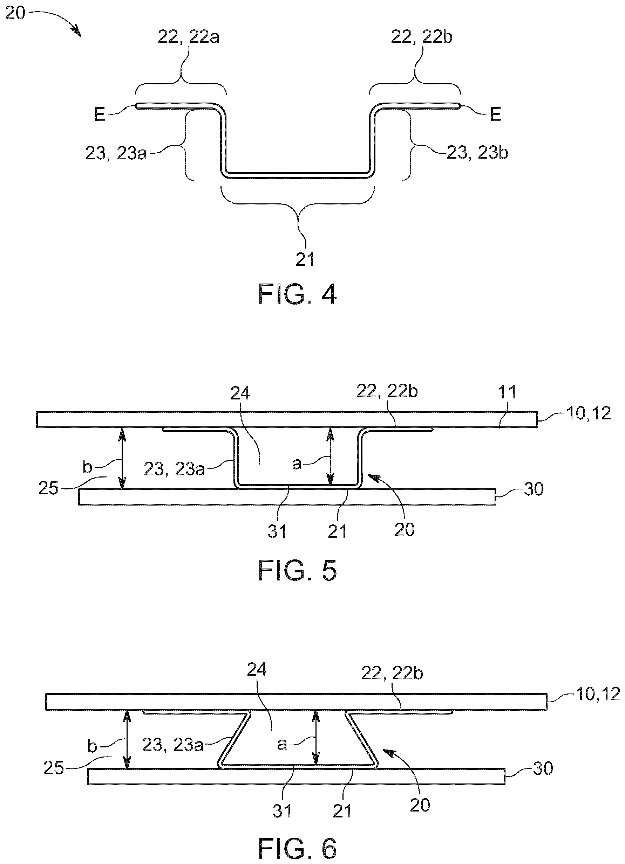

Fig. 4 discloses a vertical cut through a pad 20 according to an embodiment of the invention and Fig. 5 discloses a vertical cut through a busbar 30 -pad 20 -flexible interconnect 10 structure according to an embodiment of the invention, with the pad 20 of Fig. 4. Referring to Fig. 4, the pad 20 has a u-shape but is not limited thereto. The pad 20 has a first part 21 extending in a first plane, in the embodiment shown in a horizontal plane, at least one second part 22 extending in a second plane, here also in a horizontal plane, parallel to the first plane and spaced apart from the first part 21 with its first plane in a direction perpendicular to the first and second planes, and at least one third part 23 connecting the first part 21 with the corresponding at least one second part 22. Further, the first part 21 extends from the third part 23 in a direction opposite the direction the at least one second part 22 extends from the third part 23. Optionally, the third part 23 is formed to extend in a plane perpendicular to the first plane and the second plane. In this non-limiting example, the pad 20 has the u-shape. However, it is explicitly noted that even though the corners between the first part 21 and the third part 23 and/or the corners between the third part 23 and the second part 22 may be rounded, they are not limited thereto. In fact, they may be edge or round or any shape in between. The u-shape may include perpendicular straight lines, i.e. each of the first, second and third part 21, 22, 23 may include straight line such that the third part 23 is perpendicular to the first and second part 21, 22. The second part or the second parts 22 are formed to extend along a stacking direction of the battery cells (not shown) or along a direction between terminals of different battery cells (not shown). They may be formed planar such that the interconnect 10 can be placed and supported on the planar second parts 22. Two second parts may be provided spaced apart from each other in the horizontal direction such that a gap 24 is formed between the center of the pad 20, the first part 21, and the interconnect 10. The planar shape improves the contact area between the second part 22 and the interconnect 10 and improves assembly. Also, the first part 21 may be formed planar, at least on its lower surface, such that the contact between the busbar 30 and the pad 20 is improved.

In other words, the pad 20 provides a gap 24, i.e. a spacing in vertical direction, between the interconnect 10 and the first part 21 of the pad 20, by the distance b between the planes of the first part 21 and the second part 22, established by the vertical extending connecting structure, the third parts 23. The pad 20 has a structure such that its upper part, i.e. the second part 22, is spaced apart from its lower part, the first part 21. The pad 20 according to an embodiment may have an integral structure. it is formed by punching a flat sheet into a corresponding three-dimensional shape.

In the embodiment shown, one first part 21 is connected to two second parts 22a, 22b by two third parts 23a, 23b. The leftmost second part 22a extends from the upper end of the leftmost third part 23a towards the left. The first part 21 extends from the lower end of the leftmost third part 23a towards the right and contacts the rightmost third part 23b on its lower end. The rightmost second part 22b extends from the upper end of the rightmost third part 23b towards the right. In this way, a three-dimensional pad structure is formed, in the embodiment shown a u-shaped pad structure. The pad 20 may have a rectangular structure which is preferred with respect to a bowl-like structure.

Fig. 5 is a vertical cut through a battery cell contact structure according to an embodiment. Referring to Fig. 5, the pad 20 of Fig. 4 is arranged between a busbar 30 and an interconnect 10. The pad 20 electrically contacts the upper side of the busbar 30 on its lower side, the lower surface of the first part 21. On the other hand, the pad 20 electrically contacts the lower surface of the interconnect 10 on its upper side, the upper surfaces of the second parts 22. The pad 20 may have a u-shape but is not limited thereto. The first part 21 and the second part 22 may be formed planar. This shape of the pad 20 is in particular characterized by that the busbar 30 is attached to the first part 21 of the pad 20, and the flexible interconnect 10 is attached to the at least one second part 22 of the pad 20. The first part 21 may be welded to the busbar 30, e.g. at a welding spot 31. The welding spot 31 may be located in the middle of the first part 21. In this way, the welding spot 31 can be accessed conveniently from the top. However, welding from the side is also an option, in particular when the welding spot 31 is not located in the middle, depending on the manufacturing process as a whole. Also, a plurality of welding spots 31 may be formed, for instance at the ends of the first part 21. Optionally, the connections of the first part 21 and the second part 22 can be direct or through additional connection enhancing intermediate layers. Similarly, the second part 22 may be soldered to the flexible interconnect 10(For example, to the FPC 12). In this particular figure, two second parts 22 are connected to flexible interconnect 10. It becomes further clear that the first part 21 forms the bottom of the pad 20 and the two third parts 23 form the upright side-portions of the pad 20, and the two second parts 22 extend from the upper ends of the third parts 23. The second parts 22 are connected to the flexible interconnect 10 and establish an electrical connection between the flexible interconnect 10 and the pad 20. Similarly, the first part 21 is connected to the busbar 30 and establishes an electrical connection between the busbar 30 and the pad 20. The third part 23 connects the first part 21 and the second part 23, and thereby connects the busbar 30 with the flexible interconnect 10 through the pad 20.

It is obvious from Fig. 5 that the pad 20 can be located at any arbitrary position between the flexible interconnect 10 and the busbar 30, i.e. it could be moved horizontally to any arbitrary position. If the pad 20 is placed as shown in Fig. 5, a first gap 24 with a distance a from the upper side of the first part 21 to the lower side of the flexible interconnect 10 is formed. Here, the distance a of the first gap 24 is larger than the material thickness of the second part 22 of the pad 20. Additionally, a second gap 25 is formed between the flexible interconnect 10 and the busbar 30, spanning a distance b. Analogously, the distance b of the second gap 25 is larger than the sum of the material thicknesses of the first part 21 and the second part 22 of the pad 20. In this embodiment, a distance b is equal to distance "a" plus the thickness of part 21 of the pad 20.

Compared to Fig. 3, the distance "b" between the interconnect 10 and the busbar 30 is increased by several multiples of the material thickness of the pad 20 of Fig. 3

Even though not depicted, the flexible interconnect 10 is further provided with signal lines on its surface facing the pad 20 for connecting the pad 20 in order to transfer electrical information through said line to a BMU/BMS. One flexible interconnect 10 may connect multiple pads 20 with multiple signal lines. Those signal lines are covered by an isolation layer 11 in order to prevent short circuits between different lines. The isolation 11 may be a coating layer of Polyimide (PI) which may be several tenth of micrometer thick. A thickness of more than 10 µm would be sufficient and a thickness of at most 100 µm would be sufficient for most conditions. Therefore, a suitable range for the thickness is 10 to 100 µm, for example 30 to 80 µm or 40 to 65 µm. If the isolation is breached by sharp edges, like from welding spots or preceding production processes of the pad 20, e.g. a burr from punching, this may result in a short circuit between normally unconnected busbars 30 and - if accidentally connected - lead to as short circuit and corresponding high currents, which would likely lead to the destruction of certain parts of the circuit, which could damage or destroy the whole battery module 1 or pack.

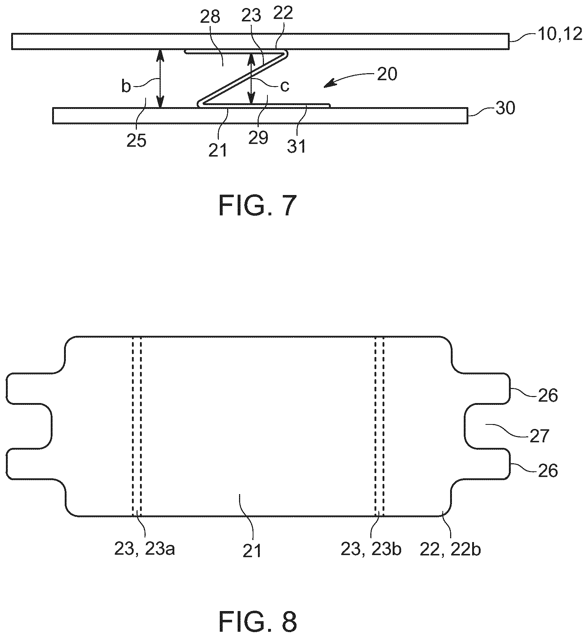

Figs. 6 and 7 are cross-sectional views illustrating two further embodiments of the pad 20. Firstly, Fig. 6 shows an Ω-like shaped pad 20. The structure is similar to the u-shaped pad 20, except that a third parts 23 may be angled, tilted, oblique or rounded. An angled, tilted or rounded shape provides additional flexibility. In the orientation shown the shape of the pad 20 might be referred to as an upside-down Ω-like shape. In this embodiment, the upper portion of the Ω-shape corresponds to a first part 21, which may be flat. The two third portions 23 are angled or tilted towards the vertical direction, in particular angled in opposite directions. While in the embodiment, an angle is formed between the first part 21 and the third part 23, the transition between both parts may be rounded. Due to the angled, tilted or oblique arrangement of the third part 23, the first part 21 and a second part 22 overlap in horizontal direction. The amount of overlap is controlled by the angle of inclination of the third part 23. Thereby, the pad 20 may be made more compact. Further, the angle controls the flexibility in horizontal and vertical direction, which is further discussed below.

Fig. 7 shows a z-shaped pad 20. In this embodiment, there may only be one second part 22 connected by one third part 23. In this embodiment, the third part 23 is angled or formed to extend in a plane tilted with respect to a plane perpendicular to the first plane and second plane. Optionally, the first part 21 might be a bit longer than the second part 22. Thereby, a welding spot 31 accessible from the top might be preserved. Alternatively, the first part 21 and the second part 22 may have the same length. This serves a compact design. In this embodiment, a third gap 28 between the second part 22 and the third part 23, and a fourth gap 29 between the third part 23 and the first part 21 may be formed. The third gap 28 and the forth gap 29 have a triangular shape, at least the region of the third part 23. For this embodiment, the distance between the flexible interconnect 10 and the busbar 30 is - as seen along a normal on the plane of the first part and/or second part, or in the direction of arrow b; from bottom to top - the sum of the thickness of the first part 21, the height of the fourth gap 29, the height of the third part 23 along the normal, the height of the third gap 28 and the thickness of the second part 22.

When comparing the embodiments of Fig. 5 to 7, the third part 23 in Fig. 5 is formed in a straight line, i.e. connects the first part 21 and the second part 22 by the shortest possible distance. This allows for strong support in vertical direction. Additionally, the pad 20 is flexible in the horizontal direction. Both embodiments in Figs. 5 and 6 form one first gap 24 between the flexible interconnect 10 and the first part 21. The distance "b" of the second gap 25 may be identical and may not be influenced by the shape of the pad 20 directly. In other words, the shape of the pad can be adopted for the required or targeted distance "b" of the second gap 25. The third parts 23 in Fig. 6 and 7 are angled towards the vertical direction. By altering said angle, the elasticity of the pad 20 can be adjusted in horizontal and vertical direction. For example, when the third part 23 is more upright, flexibility in horizontal direction is improved. When the third part 23 is less upright, flexibility in vertical direction is improved. Further, by altering the number of third parts 23, the amount of support and/or the size of the footprint of the pad 20 can be adjusted.

However, it should be kept in mind that many other shapes can achieve the same functionality, i.e. the pad 20 is not limited to the shapes disclosed in Fig. 5-7. E.g., a u-shaped pad 20 may be cut in half vertically in the middle of the first part 21 and would still solve the problem of the present invention. The pad 20 may also be non-planar. Further, the first part 21 and/or the second part 22 do not have to be flat or planar, but can have any arbitrary shape like rounded, zigzag, triangle, step-like, trapezoidal and so on. For example, the first part 21 has a suitable shape for welding it to the busbar 30. Similarly, the second part 22 may have a suitable shape for soldering it to the flexible interconnect 10. The third part 23 is enclosed or in between the first part 21 and the second part 22 or the second parts 22 when seen from one open-end E of the pad 20 to another open-end E of the pad 20. The pad 20 may be formed from one piece. Optionally, and even though no illustrative example is provided for other battery cell types, the same structure may be implemented for any arrangement of other cell types, e.g. round cells. Since round battery cells have poles on opposite ends, the busbar, the flexible interconnect and the pad may be arranged on both ends, respectively. Furthermore, if a step exists on the battery cell, on the busbar, or on the interconnect, the pad structure may be adopted to such structure such that first instance the lower part 21 is divided in two parts extending in different planes or such that on third part 23 may be longer than the other third part 23. Thereby, the second parts 21 extends in different but parallel planes.

Fig. 8 shows a pad 20 embodied as a u-shape seen in top-view. The pad 20 still consists of a first part 21, two second parts 22 and two third parts 23, between the first part 21 and the second part 22. Here, the second part 22 may be formed as a flange, which may have in its plane and on its free end, at least one finger 26, and a recess 27, respectively. The recess 27 may accommodate solder for soldering the pad 20 to a flexible interconnect 10. The recess 27 has in particular the advantage that solder is concentrated in a defined location during soldering. I.e., the recess restricts the flow of the solder and may accommodate different volumes of solder. Different volumes of solder may be the result of tolerances of a solder dispensing means. Therefore, the recess 27 ensures a consisting soldering connection.

With the new design according to the present invention, automated placement now becomes possible for the first time due to the relaxed placement requirements, the reduced short circuit risk and the option to optically confirm the placement of the flexible interconnect 10.

Additionally, the elevated placement of the flexible interconnect 10 on the busbar 30 introduces a new level of flexibility into the battery module. Even though the battery cells 1 may swell due to aging or electrical stress, the cells 1 still remain electrically functional. Therefore, the flexibility of the internal wiring connections prevents mechanical stress on the cell terminals and the interconnect structure. In other words, if mechanical stress caused by swelling of cells 1 leads to mechanical stress on internal electrical contacts, the contacts are likely to degrade and may fail. Even if only one connection between the flexible interconnect 10 and the busbar 30 fails, this may cause a battery module failure, since when the cell potential cannot be monitored anymore by the EMU/BMS, then, the whole module is likely to be shut down for safety reasons. In other words, flexibility of the interconnect system increases reliability on the whole battery module.

### Reference Signs

- 1: battery module
- 2: battery cell
- 3: terminal
- 10: flexible interconnect
- 11: isolation layer
- 12: flexible printed circuit
- 17: mounting hole
- 18: stress relieve portion
- 19: pad-portion
- 20: pad
- 21: first part
- 22: second part
- 22a: leftmost second part
- 22b: rightmost second part
- 23: third part
- 23a: leftmost third part
- 23b: rightmost third part
- 24: first gap
- 25: second gap
- 26: fingers
- 27: recess
- 28: third gap
- 29: fourth gap
- 30: busbar
- 31: welding spot

## Claims

1. A battery module (1) comprising:
a plurality of battery cells (2),
a busbar (30) for electrically connecting the plurality of battery cells (2),
a flexible interconnect (10) for providing electrical information of the battery cells (2) to a battery management system,
a conductive pad (20) provided between the flexible interconnect (10) and the busbar (30),
**characterized in that**
the conductive pad (20) comprises:
a first part (21) extending in a first plane,
at least one second part (22) extending in a second plane parallel to the first plane and spaced apart from the first part (21) in a direction perpendicular to the first and second planes,
at least one third part (23) connecting the first part (21) with the at least one second part (22),
wherein the first part (21) extends from the third part (23) in a direction opposite the direction the at least one second part (22) extends from the third part (23),
the busbar (30) is attached to the first part (21) of the conductive pad (20), and
the flexible interconnect (10) is attached to the at least one second part (22) of the conductive pad (20).

2. The battery module according to claim 1, wherein a first gap (24) is formed between the flexible interconnect (10) and the first part (21) of the conductive pad (20), and wherein the height of the first gap (24) is larger than the material thickness of the first part (21) of the conductive pad (20).

3. The battery module according to one of the preceding claims, wherein a second gap (25) is formed between the flexible interconnect (10) and the busbar (30), and wherein the height of the second gap (25) is larger than the sum of the material thicknesses of the first part (21) and the second part (22) of the conductive pad (20).

4. The battery module according to one of the preceding claims, wherein the busbar (30) is below the first part (21) of the conductive pad (20) and on top of the battery cells and/or the flexible interconnect (10) is on top of the second part (22) of the conductive pad (20).

5. The battery module according to one of the preceding claims, wherein the first part (21) is directly connected to the busbar (30).

6. The battery module according to any one of the previous claims, wherein the first part (21) is welded to the busbar (30).

7. The battery module according to one of the preceding claims, wherein the second part (22) is directly connected to the flexible interconnect (10).

8. The battery module according to one of the preceding claims, wherein the second part (22) is soldered to the flexible interconnect (10).

9. The battery module according to one of the preceding claims, wherein the conductive pad (20) is non-planar.

10. The battery module according to one of the preceding claims, wherein the first part (21) and/or the second part (22) is planar.

11. The battery module according to one of the preceding claims, wherein the third part (23) is formed to extend in a plane perpendicular to the first plane and the second plane.

12. The battery module according to one of claims 1 to 11, wherein the third part (23) is formed to extend in a plane tilted with respect to a plane perpendicular to the first plane and the second plane.

13. The battery module according to one of the preceding claims, wherein the conductive pad (20) has a u-shape (200), an Ω-shape (300) or a z-shape (400).

14. The battery module according to one of the preceding claims with two second parts (22) and two third parts (23), wherein the first part (21) is between the two second parts (22), and wherein the two third parts (23) are between the respective second part (22) and the first part (21).

15. The battery module according to one of the preceding claims, wherein the at least one second part (22) is, in its plane and on its free end, recessed such that two fingers (26) and a recess (27) are formed.

## Amended claims

### Amended claims in accordance with Rule 137(2) EPC.

1. A battery module (1) comprising:
a plurality of battery cells (2),
a busbar (30) for electrically connecting the plurality of battery cells (2),
a flexible interconnect (10) for providing electrical information of the battery cells (2) to a battery management system,
a conductive pad (20) provided between the flexible interconnect (10) and the busbar (30),
wherein the conductive pad (20) comprises:
a first part (21) extending in a first plane,
two second parts (22) extending in a second plane parallel to the first plane and spaced apart from the first part (21) in a direction perpendicular to the first and second planes,
two third parts (23) connecting the first part (21) with the at least one second part (22),
wherein the first part (21) extends from the third part (23) in a direction opposite the direction the at least one second part (22) extends from the third part (23),
the busbar (30) is attached to the first part (21) of the conductive pad (20), and
the flexible interconnect (10) is attached to the at least one second part (22) of the conductive pad (20),
wherein the first part (21) is between the two second parts (22), and wherein the two third parts (23) are between the respective second part (22) and the first part (21).

2. The battery module according to claim 1, wherein a first gap (24) is formed between the flexible interconnect (10) and the first part (21) of the conductive pad (20), and wherein the height of the first gap (24) is larger than the material thickness of the first part (21) of the conductive pad (20).

3. The battery module according to one of the preceding claims, wherein a second gap (25) is formed between the flexible interconnect (10) and the busbar (30), and wherein the height of the second gap (25) is larger than the sum of the material thicknesses of the first part (21) and the second part (22) of the conductive pad (20).

4. The battery module according to one of the preceding claims, wherein the busbar (30) is below the first part (21) of the conductive pad (20) and on top of the battery cells and/or the flexible interconnect (10) is on top of the second part (22) of the conductive pad (20).

5. The battery module according to one of the preceding claims, wherein the first part (21) is directly connected to the busbar (30).

6. The battery module according to any one of the previous claims, wherein the first part (21) is welded to the busbar (30).

7. The battery module according to one of the preceding claims, wherein the second part (22) is directly connected to the flexible interconnect (10).

8. The battery module according to one of the preceding claims, wherein the second part (22) is soldered to the flexible interconnect (10).

9. The battery module according to one of the preceding claims, wherein the conductive pad (20) is non-planar.

10. The battery module according to one of the preceding claims, wherein the first part (21) and/or the second part (22) is planar.

11. The battery module according to one of the preceding claims, wherein the third part (23) is formed to extend in a plane perpendicular to the first plane and the second plane.

12. The battery module according to one of claims 1 to 11, wherein the third part (23) is formed to extend in a plane tilted with respect to a plane perpendicular to the first plane and the second plane.

13. The battery module according to one of the preceding claims, wherein the conductive pad (20) has a u-shape (200), an Ω-shape (300) or a z-shape (400).

14. The battery module according to one of the preceding claims, wherein the at least one second part (22) is, in its plane and on its free end, recessed such that two fingers (26) and a recess (27) are formed.
